# FASCICULE DE BREVET EUROPEEN

(11) **EP 2 052 516 B1**
(45) Date de publication et mention de la délivrance du brevet: **28.12.2011**
(21) Numéro de dépôt: 07787939.3
(22) Date de dépôt: 26.07.2007
(51) Int. Cl.: H04L 29/06

(54) **METHODE D'ACCES CONDITIONNEL LOCAL POUR EQUIPEMENTS MOBILES**
LOKALES ZUGANGSBERECHTIGUNGSVERFAHREN FÜR MOBILEMPFÄNGER
LOCAL CONDITIONAL ACCESS METHOD FOR MOBILE RECEIVERS

(30) Priorité: 02.08.2006 EP 06118345
(43) Date de publication de la demande: 29.04.2009
(73) Titulaire: Nagravision S.A., 1033 Cheseaux-sur-Lausanne (CH)
(72) Inventeur: MOREILLON, Guy, 1042 Bioley-Orjulaz (CH)
(74) Mandataire: Leman Consulting S.A.
(86) Numéro de dépôt international: PCT/EP2007/057717
(87) Numéro de publication internationale: WO 2008/015155

(56) Documents cités:
- WO-A-2005/036820
- US-A1- 2005 234 735
- US-A1- 2006 112 188

## Description

### Domaine technique

L'invention concerne le domaine de l'accès conditionnel à un flux de données numériques diffusé par voie hertzienne et reçu par une pluralité d'équipements mobiles, tels que, par exemple, un téléphone portable, un assistant personnel PDA (Personal Digital Assistant), un récepteur portable de télévision numérique, un ordinateur portable.

Les données diffusées sont cryptées et ne peuvent être reçues en clair que par des équipements autorisés dont l'utilisateur a acquis les droits nécessaires. Ces droits, stockés dans un module de sécurité associé à l'équipement mobile, consistent en un ensemble de clés permettant de décrypter des mots de contrôles contenus dans des messages de contrôle ECM (Entitlement Control Message) diffusés dans le flux des données audio / vidéo.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un contenu diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

Ce module peut être réalisé sous forme logicielle et faire partie du logiciel de l'équipement mobile. De préférence, ce logiciel sera exécuté dans une zone particulière de la mémoire afin de minimiser les intrusions d'autres logiciels.

### Arrière plan technique

Actuellement les équipements mobiles configurés pour la réception de programmes de télévision numérique sont basés sur des technologies normalisées telles que OMA (Open Mobile Alliance), DVB-H (Digital Video Broadcast, Handheld), ou DMB (Digital Multimedia Broadcasting) qui est en quelque sorte une extension à large bande de DAB (Digital Audio Broadcasting).

La technologie OMA met en oeuvre une solution complète unique pour un marché donné comme celui des téléphones portables où chaque équipement et les fournisseurs de contenu supportent la technologie OMA.

La technologie DVB a été conçue pour normaliser les décodeurs de télévision numériques (set top boxes) dans le but de réduire leurs coûts à grande échelle. Elle normalise les éléments intervenant au niveau de l'accès conditionnel au contenu diffusé dans le format MPEG-2 ou MPEG-4 pour la télévision mobile sur Internet. Ces éléments consistent en l'algorithme d'encryption du contenu diffusé, les messages de contrôle ECM contenant les clés de décryption ou mots de contrôle, les messages d'administration EMM contenant les droits des utilisateurs et l'interface entre le décodeur et le module de sécurité gérant l'accès conditionnel.

Dans le cas particulier de la télévision mobile DVB-H, la protection du contenu est développée par le groupe DVB-CBMS (Digital Video Broadcasting - Convergence of Broadcast and Mobile Services).

La normalisation ne s'étend ni au contenu à valeur ajoutée des messages ECM et EMM, ni à la méthode de protection de ceux-ci. Chaque fournisseur d'accès conditionnel utilise sa propre structure de données et ses propres moyens de protection pour un même contenu diffusé. La technologie DVB offre donc de nombreuses possibilités de développement de la sécurité du contenu.

Il est bien connu de permettre à un diffuseur de gérer la réception d'un événement selon l'emplacement géographique. En effet, les diffuseurs souhaitent interdire l'accès à un contenu tel qu'une retransmission sportive dans les alentours du lieu où se déroule cet événement. Ainsi, par la connaissance de l'emplacement de chaque récepteur, une commande dite de « blackout » est envoyée au récepteur avec par exemple le ou les codes postaux qui ne peuvent visualiser l'événement en direct. Le module de sécurité du récepteur qui détient l'information de localisation (par exemple le code postal de l'abonné au service), recevant ce message, va donc appliquer une nouvelle règle lors de la vérification des droits et même si le récepteur dispose des droits pour cet événement, le message de « blackout » a priorité pour interdire l'accès à l'événement en ne renvoyant pas les mots de contrôle qui ont servi à encrypter l'événement.

Néanmoins, dans l'univers mobile, cette notion de "code postal" n'a plus cours et il n'est pas possible d'interdire une réception sur un tel dispositif portable.

### Brève description de l'invention

Le but de la présente invention est de pouvoir disposer des mêmes moyens de restriction dans le monde mobile que ce qui est appliqué avec des récepteurs fixes.

Ce but est atteint par une méthode d'accès conditionnel à un flux de données numériques encryptées avec au moins un mot de contrôle et diffusé via un émetteur d'un réseau de diffusion à au moins un équipement mobile, cet émetteur transmettant également un flux de messages de contrôle contenant les mots de contrôle et les conditions d'accès, cet équipement mobile étant également connecté à un réseau de communication mobile via un point d'accès mobile, ladite méthode est caractérisée en ce qu'elle comprend les étapes suivantes:
- réception par l'équipement mobile du flux de messages de contrôle,
- détermination d'un identifiant de localisation dudit mobile soit par l'identifiant du point d'accès mobile, soit par l'identifiant de l'émetteur du réseau de diffusion,
- vérification des conditions d'accès contenues dans le message de contrôle, lesdites conditions comprenant une condition de réception liée à au moins un identifiant de point d'accès mobile et/ou d'un identifiant d'émetteur du réseau de diffusion,
- comparaison entre l'identifiant de localisation avec le ou les identifiants contenues dans les conditions d'accès,
- autorisation ou blocage de l'accès audit flux de données si la comparaison est positive.

Cette méthode peut être utilisée pour bloquer l'accès à des équipements mobiles dans une certaine région (blackout) ou au contraire, pour autoriser l'accès uniquement dans cette région (hot spot).

Selon le mode de réalisation, la manière pour déterminer l'identifiant de localisation peut être basée sur l'identifiant de la cellule mobile (point d'accès mobile) ou l'identifiant de l'émetteur du réseau de diffusion.

Dans le premier cas, il est fort probable que la précision de localisation soit plus précise en raison de la faible portée des points d'accès mobile.

Le document WO 2005/036820 décrit deux types de vérification faites par un récepteur, la vérification des droits à priori et la vérification du comportement à posteriori. Il décrit la mise en oeuvre d'un module de supervision du fonctionnement de l'équipement mobile qui a pour tâche de vérifier un grand nombre de paramètres afin de déterminer si l'équipement a un comportement non-autorisé. Un des paramètres est relatif à la fonction blackout qui est mis en oeuvre grâce à un module GPS.

Le document US 2006/112188 décrit une méthode pour réaliser la fonction "blackout" pour un téléphone mobile. La solution proprosée est d'identifier la position du téléphone mobile, par exemple par la tour de transmission (transmission tower) par laquelle le téléphone à accès au réseau et pour autoriser ou interdire le transfert du contenu soumis au "blackout" en agissant directement sur la source d'émission. Dans le second cas, le réseau de diffusion comprend une pluralité d'émetteurs qui en plus de diffuser le flux de données, diffuse des données de service dans lesquelles il est possible d'identifier l'émetteur sur lequel est calé l'équipement mobile.

### Brève description des figures

L'invention sera mieux comprise grâce à la description détaillée qui va suivre et qui se réfère aux figures annexées données à titre d'exemples nullement limitatifs.

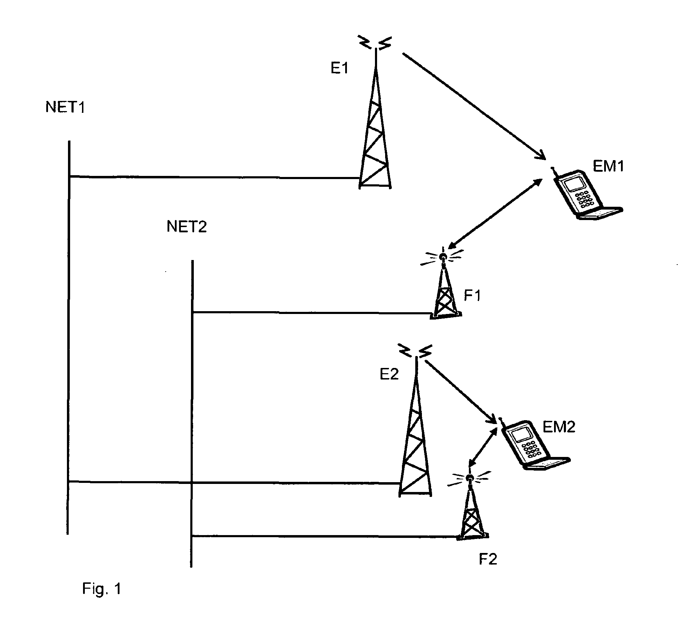

- La figure 1 illustre un schéma bloc d'un exemple de configuration avec deux émetteurs placés en des lieux distincts et pouvant être captés par un équipement mobile local.
- La figure 2 illustre un exemple schématisé de zones de diffusion des émetteurs du réseau diffusion et des cellules du réseau mobile à l'intérieur de ces zones de diffusion.

### Description détaillée de l'invention

Un flux de données numériques formant un contenu (C) encrypté avec des mots de contrôle (CW) sont diffusées avec des messages de contrôle ECM. Ces données numériques peuvent aussi bien comprendre des données audio/vidéo de programmes de télévision que des données correspondants à des applications pouvant être exploitées par un équipement mobile.

Un serveur d'un fournisseur de contenus à accès conditionnel est connecté à un réseau de diffusion (NET1). Ce réseau diffuse par plusieurs antennes E1, E2 vers des équipements mobiles EM1, EM2. Selon la localisation de l'équipement mobile, ce dernier se connectera plutôt sur l'antenne E1 que l'antenne E2.

De la même manière, les équipements mobiles EM1, EM2 sont reliés au réseau de télécommunication mobile NET2 par des antennes appropriées F1, F2.

Que ce soit par le réseau d'antennes de diffusion E1, E2 ou par les antennes de télécommunication mobile F1, F2, l'équipement mobile peut déterminer sa position géographique. Dans le protocole de communication des deux systèmes de communication, l'identifiant de l'antenne est transmis à l'équipement mobile et sert donc d'identifiant de localisation. Cet identifiant est utilisé par exemple pour la mesure de la qualité de réception d'un réseau.

Cet identifiant en tant que tel ne donne pas nécessairement d'indication géographique et peut être une simple valeur alphanumérique.

Parallèlement, l'émetteur de diffusion envoie avec le flux de données audio/vidéo, un flux de données de messages de contrôle. Le message de contrôle contient le ou les mots de contrôle servant à décrypter le contenu encrypté et contient également les conditions d'accès à ce contenu.

Selon l'invention, les conditions d'accès comprennent, en plus des droits nécessaires à la réception du contenu (abonnement par exemple), un ou des identifiants d'antennes relatif à la zone d'interdiction ou d'autorisation de réception. Ces identifiants peuvent être relatifs au réseau de diffusion NET1 ou relatifs au réseau de télécommunication mobile NET2. On peut également inclure dans les conditions d'accès une liste conjointe comprenant un ou des identifiants des deux réseaux.

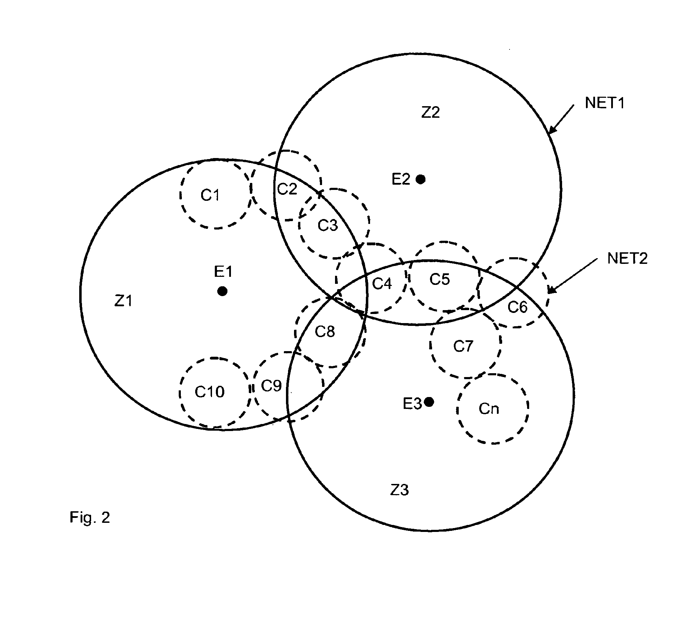

Comme on le voit sur la figure 2, il est préférable d'utiliser les identifiants du réseau de télécommunication mobile C1 à Cn. La couverture de chaque cellule est plus petite ce qui permet de mieux délimiter la zone d'interdiction. Néanmoins dans certaines circonstances, par exemple pour bloquer ou autoriser l'accès sur toute une ville, le plus simple est de le faire par les identifiants des quelques émetteurs de diffusion de cette ville.

Lorsqu'un message de contrôle arrive sur l'équipement mobile, ce message est transmis aux moyens de sécurité de l'équipement. Ces moyens peuvent être soit la carte SIM de l'équipement mobile, soit un circuit spécialisé (directement soudé sur le circuit imprimé), soit être réalisé sous la forme logicielle. Ces moyens de sécurité vérifient si les conditions d'accès énumérées dans le message de contrôle sont remplies. Ces conditions peuvent avoir plusieurs formes, telles qu'un droit spécifique à un contenu, un droit général pour un canal donné ou un système de paiement par temps tel que décrit dans la demande WO03/085959. Selon l'invention, en plus des conditions telles que décrites précédemment, et pour autant que la réception du contenu soit limitée en fonction de l'emplacement géographique, les moyens de sécurité vérifient si l'identifiant de localisation obtenu de l'antenne de diffusion ou de télécommunication est présent dans la liste d'identifiants comprise dans le message de contrôle. Si l'identifiant de localisation est compris dans la liste du ou des identifiants transmis dans les conditions d'accès, les moyens de sécurité pourront soit renvoyer le mot de contrôle aux moyens de décryption (version hot spot) ou au contraire bloquer la transmission du mot de contrôle aux moyens décryption (blackout).

Il est à noter que le message de contrôle est encrypté afin qu'un tiers n'aie pas accès aux identifiants servant à restreindre l'accès aux données audio/vidéo. Selon un mode particulier de l'invention, l'identifiant de localisation peut être signé afin de garantir son intégrité. Le centre de diffusion (ou centre de télécommunication selon le mode de réalisation) utilise sa clé privée (d'une paire de clés asymétriques) pour signer l'identifiant. Cette signature est réalisée de manière conventionnelle par exemple en utilisant une méthode de hachage (Hash) de l'identifiant et d'encryption de résultat par la clé privée.

A la réception, le module de sécurité dispose de la clé publique correspondante ce qui lui permet de décrypter la signature pour obtenir la valeur de Hash supposée et comparer cette valeur avec celle que le module de sécurité aura calculé sur l'identifiant de localisation. La comparaison de la valeur supposée et la valeur calculée permet, s'ils sont égaux, de s'assurer que l'identifiant n'a pas été modifié.

Dans un mode de réalisation particulier, le module de sécurité est pré-initialisé par une valeur de localisation par défaut. Cette valeur est remplacée par l'identifiant courant dès lors qu'il est communiqué au module de sécurité.

Lorsqu'un message de contrôle arrive audit module, et qu'il contient une commande de blackout, la valeur par défaut et considérée comme faisant automatiquement partie des identifiants de localisation à black-lister.

Selon un mode de réalisation il est possible de définir une durée durant laquelle un identifiant est valable. Une fois cette validité terminée, et si aucun identifiant plus récent n'a été transmis au module de sécurité, l'identifiant par défaut est rétabli avec pour conséquence d'être considéré comme actif à chaque commande de blackout. Cette durée peut soit être un paramètre du module de sécurité, soit être associée aux données de l'identifiant, par exemple avec la signature. Afin qu'un identifiant ne puisse être réutilisé, une date courante est associée à l'identifiant, de préférence signée avec l'identifiant lui-même. Ainsi, un identifiant récolté précédemment dans une autre cellule ne pourra pas être réutilisé dans un autre équipement mobile. Afin de renforcer la sécurité de l'ensemble, le module de sécurité refusera tout identifiant associé avec une date antérieure à celle de l'identifiant transmis précédemment.

En plus des réseaux de télécommunication connus tels que GSM, GPRS ou UMTS, d'autres moyens de localisation peuvent être utilisés tels que par exemple Wifi, WiMax, Wibro, soit n'importe quel réseau disposant d'un ensemble d'antennes. La précision de localisation sera directement dépendante de la densité d'antennes. Il est à noter que l'identifiant contenu dans le message de contrôle peut englober une plage d'identifiants. Si par exemple les identifiants des antennes dans une ville commencent tous par ABC (ABCV120, ABCJ11 etc), il est possible d'envoyer uniquement le préfixe ABC pour englober toutes les antennes ABCxxx. D'autres possibilités peuvent inclure une plage telle que ABC100 à ABC200.

## Revendications

1. Méthode d'accès conditionnel à un flux de données numériques encryptées avec au moins un mot de contrôle et diffusé via un émetteur d'un réseau de diffusion à au moins un équipement mobile, cet émetteur transmettant également un flux de messages de contrôle contenant les mots de contrôle et les conditions d'accès, cet équipement mobile étant également connecté à un réseau de communication mobile via un point d'accès mobile, ladite méthode est **caractérisée en ce qu'**elle comprend les étapes suivantes:
- réception par l'équipement mobile du flux de messages de contrôle,
- détermination par l'équipement mobile d'un identifiant de localisation dudit mobile soit par l'identifiant du point d'accès mobile, soit par l'identifiant de l'émetteur du réseau de diffusion,
- vérification par l'équipement mobile des conditions d'accès contenues dans le message de contrôle, lesdites conditions comprenant une condition de réception liée à au moins un identifiant de point d'accès mobile et/ou d'un identifiant d'émetteur du réseau de diffusion,
- comparaison entre l'identifiant déterminé avec le ou les identifiants contenus dans les conditions d'accès,
- autorisation ou blocage de l'accès audit flux de données si la comparaison est positive.

2. Méthode selon la revendication 1, **caractérisée en ce que** l'autorisation à l'accès audit flux de données n'est autorisé que si l'identifiant de localisation est compris dans la condition de réception.

3. Méthode selon la revendication 1, **caractérisée en ce que** l'autorisation à l'accès audit flux de données n'est autorisé que si l'identifiant de localisation n'est pas compris dans la condition de réception.

4. Méthode selon l'une des revendications 1 à 3, **caractérisée en ce que** l'identifiant de point d'accès mobile est extrait des données de service reçues dudit point d'accès mobile.

5. Méthode selon l'une des revendications 1 à 3, **caractérisée en ce que** l'identifiant d'émetteur du réseau de diffusion est extrait des données de service reçues dudit d'émetteur du réseau de diffusion.

6. Méthode selon l'une des revendications 1 à 5, **caractérisée en ce que** les conditions d'accès comprennent une liste des identifiants d'émetteur du réseau de diffusion.

7. Méthode selon l'une des revendications 1 à 5, **caractérisée en ce que** les conditions d'accès comprennent une liste des identifiants de point d'accès mobile.

8. Méthode selon l'une des revendications 1 à 7, **caractérisée en ce que** les conditions d'accès comprennent au moins une description d'un droit relatif au contenu diffusé et **en ce que** l'équipement mobile vérifie la présence de ce droit pour autoriser ou bloquer l'accès au contenu.

9. Méthode selon l'une des revendications 1 à 8, **caractérisée en ce que** l'équipement mobile comprend des moyens de sécurité en charge du traitement des conditions d'accès.

10. Méthode selon l'une des revendications 1 à 9, **caractérisée en ce que** le réseau de communication mobile est sélectionné selon l'un des types GSM, GPRS, UMTS, WiMax, Wifi, Wibro.

11. Méthode selon l'une des revendications 1 à 9, **caractérisée en ce que** l'identifiant contenu dans les conditions d'accès définit une plage d'identifiants de localisation.

12. Méthode selon l'une des revendications 1 à 11, **caractérisée en ce que** l'identifiant de localisation est signé, et **en ce que** l'équipement mobile vérifie la signature de l'identifiant avant son utilisation pour la comparaison avec le ou les identifiants contenus dans les conditions d'accès.

13. Méthode selon l'une des revendications 1 à 12, **caractérisée en ce que** l'équipement mobile comprend un identifiant par défaut considéré comme faisant partie du ou des identifiants contenus dans les conditions d'accès, provoquant le blocage de l'accès audit flux de données si aucun autre identifiant n'a été introduit.

14. Méthode selon la revendication 13, **caractérisée en ce qu'**une durée est associée à la réception d'un identifiant par l'équipement mobile, l'identifiant par défaut étant rétabli à l'expiration de cette durée.

## Claims

1. Method for conditional access to a digital data stream encrypted with at least one control word and broadcast via a transmitter in a broadcast network to at least one mobile device, said transmitter further transmitting a control message stream containing control words and access conditions, said mobile device also being connected to a mobile communication network via a mobile access point, said method being **characterized in that** it comprises the following steps:
- receiving the control message stream by the mobile device,
- determining by the mobile device a location identifier for the said mobile device either by the identifier of the mobile access point, or by the identifier of the broadcasting network transmitter,
- verifying by the mobile device the access conditions contained in the control message, said access conditions comprising a reception condition related to at least one mobile access point identifier and/or an identifier of one broadcasting network transmitter,
- comparing the determined identifier with the identifier(s) contained in the access conditions,
- authorizing or blocking the access to said data stream depending on the result of said comparison.

2. Method according to claim 1, **characterized in that** the access to said data stream is authorized only if the reception conditions comprise the location identifier.

3. Method according to claim 1, **characterized in that** the access to said data stream is only authorized if the reception conditions do not comprise the location identifier.

4. Method according to any of the claims 1 to 3, **characterized in that** the identifier of the mobile access point is extracted from the service data received from said mobile access point.

5. Method according to any of the claims 1 to 3, **characterized in that** the transmitter identifier of the broadcasting network is extracted from the service data received from said broadcasting network transmitter.

6. Method according to any of the claims 1 to 5, **characterized in that** the access conditions comprise a list of transmitter identifiers from the broadcasting network.

7. Method according to any of the claims 1 to 5, **characterized in that** the access conditions comprise a list of mobile access point identifiers.

8. Method according to any of the claims 1 to 7, **characterized in that** the access conditions comprise at least one entitlement description related to the broadcasted content and **in that** the mobile device verifies the presence of this entitlement to authorize or block the access to the content.

9. Method according to any of the claims 1 to 8, **characterized in that** the mobile device comprises security means responsible for the treatment of the access conditions.

10. Method according to one of the claims 1 to 9, **characterized in that** the mobile communication network is selected according to one of the GSM, GPRS, UMTS, WiMax, Wifi, Wibro types.

11. Method according to any of the claims 1 to 9, **characterized in that** the identifier contained in the access conditions defines a range of the location identifiers.

12. Method according to any of the claims 1 to 11, **characterized in that** the location identifier is signed, and **in that** the mobile device verifies the identifier signature before its use the comparison with the identifier(s) contained in the access conditions.

13. Method according to any of the claims 1 to 12, **characterized in that** the mobile device comprises a default identifier considered as a part of the identifier(s) contained in the access conditions, causing the blocking of the access to said data stream if no further identifier has been introduced.

14. Method according to claim 13, **characterized in that** a duration is associated to the reception of an identifier by the mobile device, the default identifier being re-established after the expiration of this duration.

## Patentansprüche

1. Zugangskontrollmethode für einen verschlüsselten digitalen Datenfluss mit mindestens einem Kontrollwort, verbreitet über einen Sender eines Verbreitungsnetzes an mindestens eine bewegliche Einrichtung, wobei der Sender auch Kontrollmitteilungen überträgt, die die Kontrollwörter und die Zugangsbedingungen enthält, und die bewegliche Einrichtung ebenfalls mit einem beweglichen Kommunikationsnetz verbunden ist, über einen beweglichen Zugangspunkt, wobei die Methode **dadurch gekennzeichnet ist, dass** sie die folgenden Schritte umfasst:
- Empfang der Übertragung von Kontrollmitteilungen durch die bewegliche Einrichtung,
- Ermittlung einer Identifizierung zur Lokalisierung der genannten beweglichen Einrichtung durch die bewegliche Einrichtung, entweder durch die Identifizierung des beweglichen Zugangspunktes oder durch die Identifizierung des Senders des Verbreitungsnetzes,
- Nachprüfung, durch die bewegliche Einrichtung, der Zugangsbedingungen in der Kontrollmitteilung, wobei diese Bedingungen eine Empfangsbedingung enthalten, die mit mindestens einer Identifizierung eines beweglichen Zugangspunkts und/oder einer Identifizierung eines Senders des Verbreitungsnetzes verbunden ist,
- Vergleich zwischen der bestimmten Identifizierung mit der oder den Identifizierung(en) in den Zugangsbedingungen,
- Berechtigung oder Blockierung des Zugangs zum genannten Datenfluss, wenn der Vergleich positiv ausgeht.

2. Methode nach Anspruch 1, **gekennzeichnet dadurch, dass** der Zugang zum Datenfluss nicht genehmigt wird, wenn die Identifizierung der Lokalisierung in der Empfangsbedingung enthalten ist.

3. Methode nach Anspruch 1, **gekennzeichnet dadurch, dass** der Zugang zum Datenfluss nicht genehmigt wird, wenn die Identifizierung der Lokalisierung nicht in der Empfangsbedingung enthalten ist.

4. Methode nach einem der Ansprüche 1 bis 3, **gekennzeichnet dadurch, dass** die Identifizierung des beweglichen Zugangspunkts den Dienstdaten entnommen wird, die vom beweglichen Zugangspunkt empfangen wurden.

5. Methode nach einem der Ansprüche 1 bis 3, **gekennzeichnet dadurch, dass** die Identifizierung des Senders des Verbreitungsnetzes den Dienstdaten entnommen wird, die vom Sender des Verbreitungsnetzes empfangen wurden.

6. Methode nach einem der Ansprüche 1 bis 5, **gekennzeichnet dadurch, dass** die Zugangsbedingungen eine Liste der Senderidentifizierungen des Verbreitungsnetzes umfassen.

7. Methode nach einem der Ansprüche 1 bis 5, **gekennzeichnet dadurch, dass** die Zugangsbedingungen eine Liste der Identifizierungen der beweglichen Zugangspunkte umfassen.

8. Methode nach einem der Ansprüche 1 bis 7, **gekennzeichnet dadurch, dass** die Zugangsbedingungen mindestens eine Beschreibung eines Rechts auf den verbreiteten Inhalt umfassen sowie dadurch, dass die bewegliche Einrichtung das Vorhandensein dieses Rechts prüft, um den Zugang zu dem Inhalt zu genehmigen oder zu blockieren.

9. Methode nach einem der Ansprüche 1 bis 8, **gekennzeichnet dadurch, dass** die bewegliche Einrichtung Sicherheitsmittel für die Verarbeitung der Zugangsbedingungen umfasst.

10. Methode nach einem der Ansprüche 1 bis 9, **gekennzeichnet dadurch, dass** das bewegliche Kommunikationsnetz vom Typ GSM, GPRS, UMTS, WiMax, Wifi oder Wibro ist.

11. Methode nach einem der Ansprüche 1 bis 9, **gekennzeichnet dadurch, dass** die in den Zugangsbedingungen enthaltene Identifizierung einen Bereich von Lokalisierungs-Identifizierungen definiert.

12. Methode nach einem der Ansprüche 1 bis 11, **gekennzeichnet dadurch, dass** die Identifizierung der Lokalisierung mit einer Unterschrift versehen ist, sowie dadurch, dass die bewegliche Einrichtung die Unterschrift der Identifizierung vor ihrer Benutzung überprüft, für den Vergleich mit der oder den Identifizierung(en) in den Zugangsbedingungen.

13. Methode nach einem der Ansprüche 1 bis 12, **gekennzeichnet dadurch, dass** die bewegliche Einrichtung eine Defaultidentifizierung umfasst, die zu der oder den Identifizierung(en) in den Zugangsbedingungen gehört und die Blockierung des Zugangs zum Datenfluss bewirkt, wenn keine andere Identifizierung eingegeben wurde.

14. Methode nach Anspruch 13, **gekennzeichnet dadurch, dass** eine Dauer mit dem Empfang einer Identifizierung durch die bewegliche Einrichtung verbunden ist, nach deren Ablauf die Defaultidentifizierung wiederhergestellt wird.
